# EUROPÄISCHE PATENTSCHRIFT

(11) **EP 1 278 671 B1**
(45) Veröffentlichungstag und Bekanntmachung des Hinweises auf die Patenterteilung: **22.10.2003**
(21) Anmeldenummer: 01919400.0
(22) Anmeldetag: 28.03.2001
(51) Int. Cl.: B60T 17/08

(54) **FEDERSPEICHERBREMSZYLINDER MIT EINER NOTLÖSEVORRICHTUNG**
SPRING BRAKE CYLINDER WITH AN EMERGENCY RELEASE DEVICE
CYLINDRE DE FREIN A ACCUMULATEUR COMPORTANT UN DISPOSITIF DE RELACHEMENT D'URGENCE

(30) Priorität: 26.04.2000 DE 10020350
(43) Veröffentlichungstag der Anmeldung: 29.01.2003
(73) Patentinhaber: KNORR-BREMSE Systeme für Schienenfahrzeuge GmbH, 80809 München (DE)
(72) Erfinder: WOLFSTEINER, Peter, 80797 München (DE); STALTMEIR, Josef, 80807 München (DE); SPIESS, Thomas, 81673 München (DE); FUDERER, Erich, 82256 München (DE)
(86) Internationale Anmeldenummer: EP0103518
(87) Internationale Veröffentlichungsnummer: WO01081144

(56) Entgegenhaltungen:
- EP-A- 0 875 433
- DE-C- 19 755 210
- US-A- 3 498 188
- US-A- 3 994 206
- US-A- 4 649 804

## Beschreibung

Die Erfindung betrifft einen pneumatisch, hydraulisch oder elektromechanisch betätigter Federspeicherbremszylinder mit einer Notlösevorrichtung gemäß dem Oberbegriff des Anspruchs 1. So ein zylinder ist z.B. aus US-A-4 649 804 bekannt.

Aus der DE PS 26 08 502 und aus der DE PS 27 48 540 sind Bremszylinder mit Notlösevorrichtungen für die Unterbrechung und automatische Rückführung der Bremsfunktion eines Federspeicherzylinders bekannt, bei welchen der Notlösehebel zum Notlösen solange betätigt bzw. gehalten werden muß, bis sich die Federspeicherkraft vollständig abgebaut hat.

Diese Lösungen haben sich zwar an sich bewährt. Wenn der Betätigungs- bzw. Notlösehebel nicht lange genug betätigt bzw. gehalten wird, sind bei extrem tiefen Temperaturen aber Zustände des Federspeichers denkbar, die nur zu einem teilweisen Kraftabbau führen. Aufgrund der mit der sinkenden Temperatur zunehmenden Zähigkeit der Schmierstoffe wird die Zeitdauer bis zum vollständigen Kraftabbau gegenüber höheren Temperaturen verlängert. Während dieses Zeitraums müßte der Notlösehebel infolgedessen gedrückt bleiben, um die Federspeicherkraft stets vollständig abzubauen.

Hier geht die Erfindung einen anderen Weg. Die Erfindung setzt bereits beim Erkennen der vorliegenden Problematik an und setzt sich angesichts dieser Problematik die Aufgabe, den gattungsgemäßen Federspeicherbremszylinder derart weiterzuentwickeln, daß Situationen, in welchen nur ein teilweiser Kraftab- oder aufbau erfolgt, zuverlässig verhindert werden.

Die Erfindung löst diese Aufgabe durch den Gegenstand des Anspruches 1. Die Haltevorrichtung zum Halten der Notlösevorrichtung an mehreren Haltepositionen wird dabei um eine Sperreinrichtung zum Verhindern des Haltens der Haltevorrichtung bei nur teilweise gelöstem Federspeicherkolben ergänzt, der ein Halten, insbesondere ein Einrasten der Notlösebetätigung bei nur teilweise gelöstem Federspeicher verhindert. Zum Notlösen des Federspeichers reicht damit eine einmalige, kurzzeitige Betätigung des Notlösehebels aus, denn das vorzeitige Einrasten des Sperrmechanismus wird durch die Sperreinrichtung zuverlässig verhindert.

Die Sperreinrichtung umfaßt einen Riegel, der den Notlösemechanismus des Federspeichers solange in der gelösten Stellung verriegelt, bis dieser vollständig gelöst bzw. wieder einsatzbereit ist.

Die Haltevorrichtung weist in einer kostengünstigen, konstruktiv einfachen Ausgestaltung eine auf ein Zahnrad wirkende Sperrklinke auf. Es ist aber auch denkbar, daß Haltevorrichtung drehend und/oder linear und/oder rastend und/oder klemmend ausgelegt ist und mehrere Haltepositionen zuläßt. Eine Feder im Kraftfluß der Betätigung der Notlösevorrichtung vermeidet auf einfache Weise Zwischenzustände der Sperrklinke.

Sinnvoll sind nach verschiedenen Ausführungsformen der Erfindung insbesondere folgende Riegelanordnungen:
- zwischen Federspeichergehäuse und Federspeicherkolben, oder
- zwischen Kolbenstange und Federspeicherkolben, oder
- zwischen Kolbenstange und Federspeichergehäuse.

Weitere vorteilhafte Ausgestaltungen der Erfindung sind den übrigen Unteransprüchen zu entnehmen.

Nachfolgend werden im wesentlichen zwei verschiedene Grundvarianten der Erfindung und der im Rahmen der Erfindung realisierten Sperreinrichtungen unter Bezug auf die Zeichnung näher beschrieben. Es zeigen:
- Fig. 1-6: verschiedene Ansichten und Betriebszustände einer ersten Grundvariante der Erfindung;
- Fig. 7a,b: eine zweite Ausführungsform der ersten Grundvariante der Erfindung;
- Fig. 8-10: verschiedene Ansichten von Elementen einer zweiten Grundvariante der Erfindung.
- Fig. 11: einen Schnitt einer dritten Grundvariante der Erfindung.

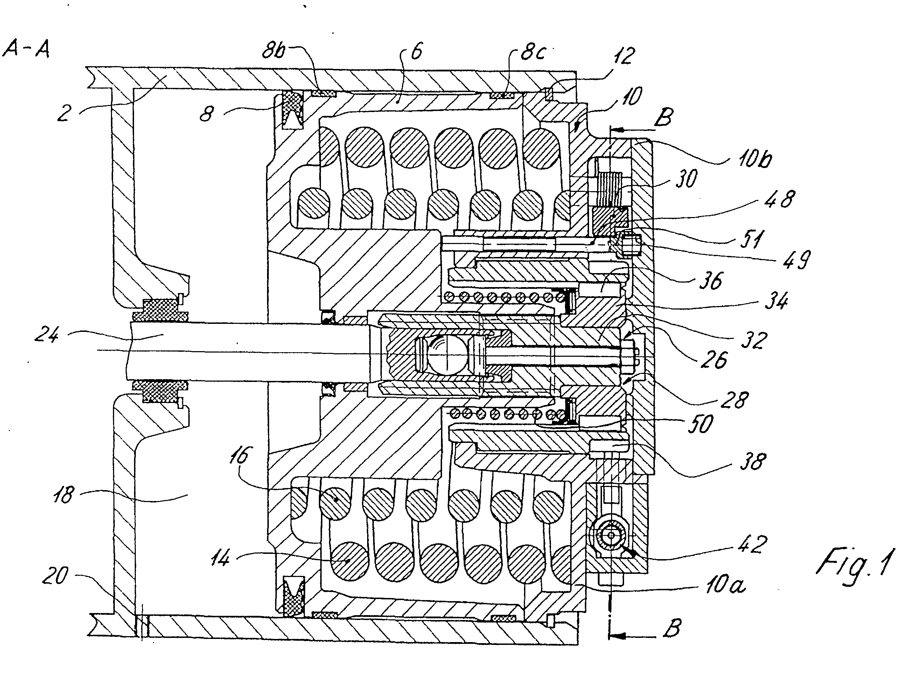

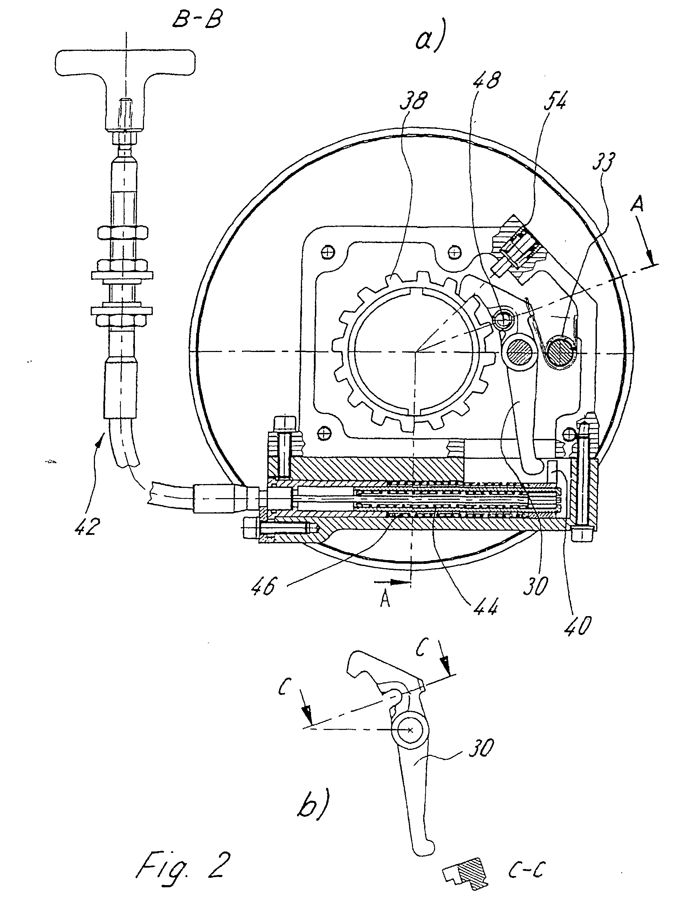

Zunächst sei am Beispiel der Variante 1 unter Bezug auf Fig. 1 und 2 die Funktion des Federspeichers der ersten Variante der Erfindung beschrieben.

Fig. 1 und 2 zeigen zwei verschiedene Ansichten eines Federspeicherzylinders 2 mit einem Gehäuse 4, in dem ein Federspeicherkolben 6 axial verschiebbar angeordnet ist, an dessen Außenumfang Dichtungen und Gleitbänder 8a-8c verteilt sind. Zwischen dem Federspeicherkolben 6 und einem axialen Gehäusedeckel 10, der mittels eines Sprengringes 12 am Innenumfang des Gehäuses 4 befestigt ist, sind die Federspeicherfedern 14, 16 angeordnet.

Zwischen dem Federspeicherkolben 6 und dem Gehäuse 4 ist ein Druckraum 18 ausgebildet, welcher über einen Luftanschluß 20 im Umfang des Gehäuses 4 mit Druck beaufschlagbar ist. Die Federspeicherbremse kann durch Be- und Entlüften über den Luftanschluß 20 gelöst und zugespannt werden. Wenn sich der Federspeicher 4 nicht im notgelösten Betriebszustand befindet, stützt sich die Kraft der Federspeicherfeder 14, 16 über den Federspeicherkolben 6 entweder auf dem Druckraum bzw. -volumen 18 oder über eine Kolbenstange 24 am Federspeicherkolben 6 auf der ansonsten hier nicht dargestellten Bremseinrichtung ab.

Zum Lösen der eingelegten Federspeicherbremse auch ohne Druckluft weist der Federspeicherzylinder 6 eine Notlöseeinrichtung 26 auf, die ein Unterbrechen des Kraftflußes zwischen Federspeicherkolben 6 und Kolbenstange 24 ermöglicht.

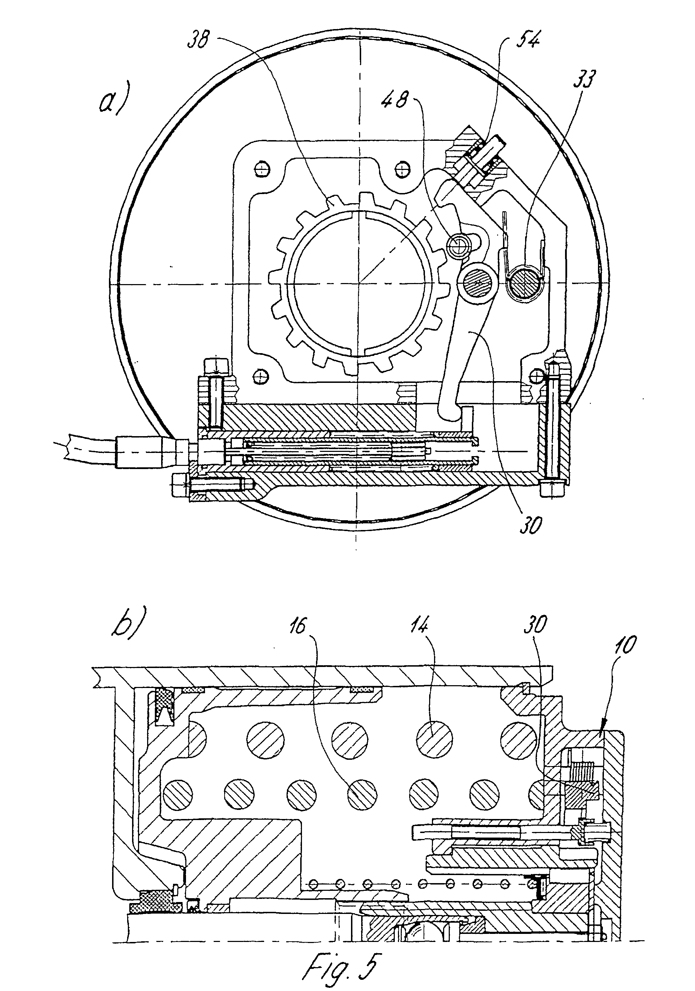

Im dargestellten Beispiel basiert die Notlöseeinrichtung 26 bzw. der Notlösemechanismus 26 im wesentlichen auf der Funktion einer Spindelanordnung 28 mit einer Sperrklinke 30, die zwischen zwei axial zueinander versetzten Abschnitten 10a und 10b des Gehäusedeckels 10 verschwenkbar gelagert ist. Im Kraftfluß zwischen dem Federspeicherkolben 6 und der Kolbenstange 24 ist die Gewindespindel 32 der Spindelanordnung ausgebildet. Deren resultierendes Drehmoment wird im gesperrten Zustand über eine verschiebbare Führung 34 mit Paßfeder 36 auf ein Zahnrad 38 übertragen, das von der Sperrklinke 30 verriegelbar ist oder freigegeben werden kann (siehe insbesondere auch Fig. 2 und 5). Das eine Ende der Sperrklinke 30 greift dazu in einer der Betriebsstellungen der Notlöseeinrichtung in das Zahnrad 38 ein. Das andere Ende der Sperrklinke 30 ist dagegen von einem Mitnehmer 40, welcher mittels einer Notlösebetätigungseinheit mit einem Bowdenzug 42 und einer am Bowdenzug ausgebildeten Rückstellfeder 44 und einer Druckfeder 46 verschieblich ist, aus der Verzahnung des Zahnrades 38 hebbar, so daß dessen Drehung in dieser Stellung der Sperrklinke 30 freigegeben ist. Dadurch kann der Kraftfluß zwischen dem Federspeicherkolben 6 und der Kolbenstange 24 unterbrochen werden. Die Sperrklinke 30 ist um eine Achse 31 verschwenkbar. Eine Klinkenfeder 33 drückt ihr eines Ende in Richtung der Verzahnung des Zahnrades 38.

Wenn die Notlöseeinrichtung betätigt wird, wenn an der Kolbenstange 24 eine Brems- bzw. Federkraft anliegt, kommt es zu einer Drehung der Gewindespindel 32, so daß sich die Bremskraft abbaut und der Federspeicherkolben am Gehäuse 4 anschlägt. Um ein erneutes Verriegeln der Sperrklinke 30 während des Lösevorganges zu verhindern, ist an der Innenfläche des Abschnitts 10b des Federspeicher- bzw. Gehäusedeckels 10 ein Riegel 48 angeordnet, der die ausgehobene Sperrklinke 30 zurückhält.

Der Riegel 48 weist im wesentlichen eine bolzenartige Form auf und ist an seinem dem Gehäusedeckelabschnitt 10b zugewandten Ende mit einem Riegelkopf 51 versehen. Zwischen dem zweiteiligen Gehäusedeckel 10a, 10b (der in diesem Bereich eine Vertiefung aufweist) und dem Riegelkopf 51 (mit axialer Ausnehmung) ist eine Riegelfeder 49 angeordnet, welche den Riegel 48 in Richtung der Sperrklinke 30 drückt und dafür sorgt, daß der Riegelkopf 51 in einer der Betriebsstellungen in eine seitliche, gestufte Ausnehmung 35 der Sperrklinke 30 zur Aufnahme des Riegels 48 eingreift und die Sperrklinke 30 in ihrer Lösestellung verriegelt (siehe Fig. 5b). Der vom Riegelkopf abgewandte Abschnitt des Riegels 48 ist bolzenartig ausgebildet, wobei der bolzenartige Abschnitt den inneren Gehäusedeckelabschnitt 10a durchsetzt und beim Verschieben des Federspeicherkolbens 6 von diesem in Richtung des Gehäusedeckels 10 verschiebbar ist, was die Riegelfeder 49 zusammenpreßt und den Riegel 48 aus seiner Raststellung in der Sperrklinke 30 drückt (Fig. 1). Erst wenn sich der Federspeicherkolben 6 nach einem Notlösevorgang in wieder betriebsbereiter Stellung befindet, gibt der Riegel 48 die Sperrklinke 30 wieder zum Einrasten frei.

Die in Fig. 2 dargestellte optionale Anzeigevorrichtung 54 zeigt den Zustand "Notgelöst" des Federspeicherzylinders 2 an, in dem die Anzeigevorrichtung 54 von der Sperrklinke 30 kontaktiert wird.

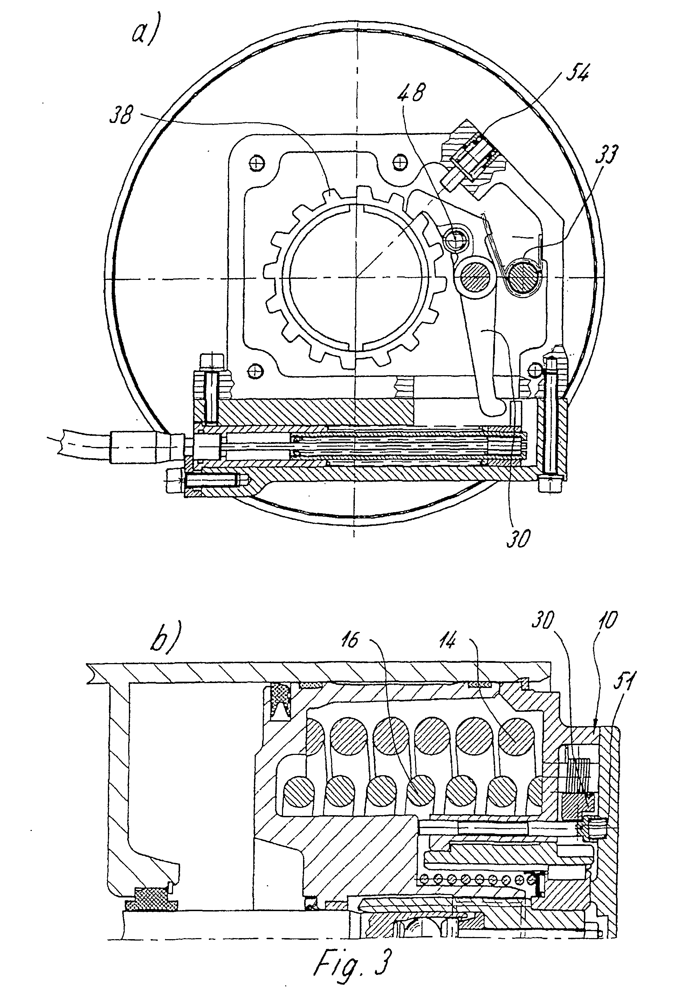

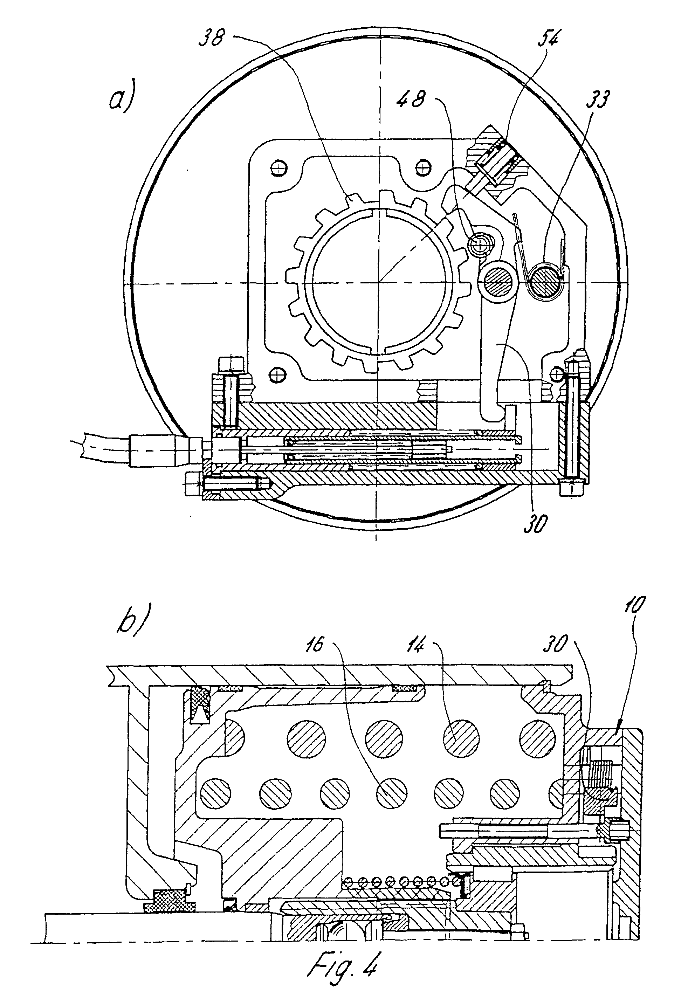

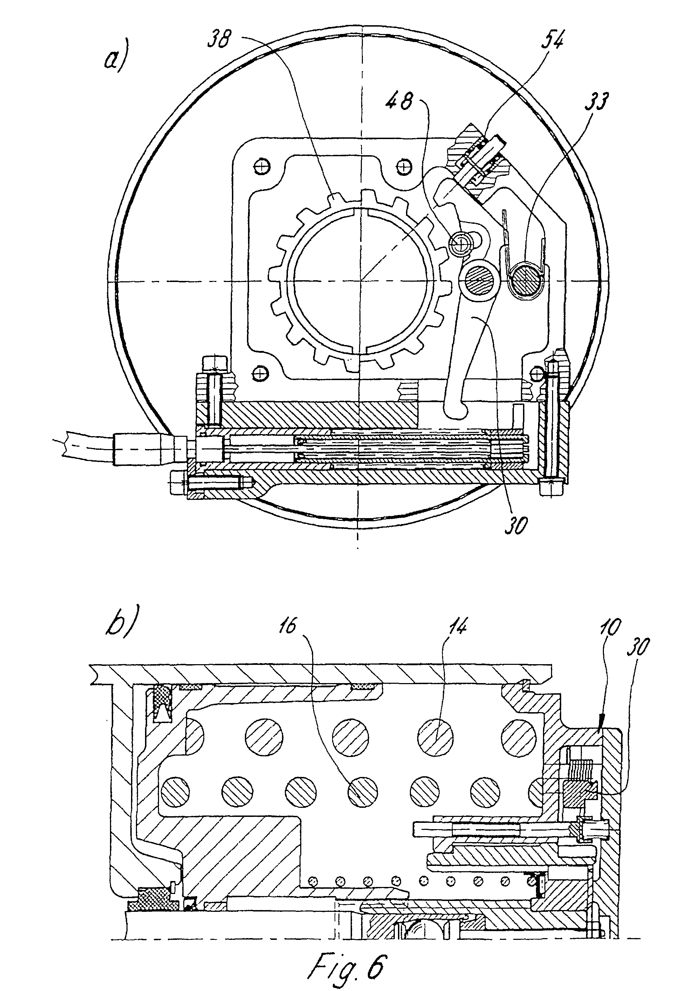

Im wesentlichen ergeben sich folgende verschiedene Stellungen des Federspeichers vor und nach einem Notlösevorgang: (Ablauf: Betriebsbereit - Notlösen-Betriebsbereit)
1. Federspeicherzylinder 2 mit Druck gelöst (Fig. 3):
   Der Federspeicherzylinder 2 ist durch den Druck im Druckvolumen 18 gelöst, der Federspeicherkolben ist in Richtung des Gehäusedeckels 10 verschoben. Es liegt keine Bremskraft an der Kolbenstange 24 an, die Sperrklinke 30 und das Zahnrad 38 befinden sich im verriegelten Zustand.
2. Federspeicher in Bremsstellung, Beginn des Notlösevorgangs (Fig. 4):
   Der Federspeicherzylinder 2 befindet sich in seiner Bremsstellung, das Druckvolumen bzw. der Druckraum 18 ist drucklos, an der Kolbenstange 24 liegt die Kraft der Federspeicherfedern 14, 16 an.
   Durch ein Ziehen an der Notlösebetätigung wird der Notlösevorgang eingeleitet. Über die Druckfeder 46 und den Mitnehmer 40 wird die Sperrklinke 30 aus der Verzahnung des Zahnrades 38 ausgehoben.
3. Notlösevorgang, Sperrklinke 30 verriegelt (Fig. 5):
   Die Federspeicherfedern 14, 16 stützen sich über den Federspeicherkolben 6 am Federspeichergehäusedeckel 10 ab. Die Kolbenstange ist kraftfrei, sie wurde durch die Rückdruckfeder 50 in ihre Ausgangsstellung gebracht.
   Die Sperrklinke 30 wird durch den eingerasteten Riegel 48 in ihrer Lösestellung gehalten, die Anzeigevorrichtung ist aktiv.
4. Federspeicher notgelöst, Notlösebetätigung zurückgezogen (Fig. 6):
   Der Federspeicherzylinder befindet sich im Zustand "notgelöst", die Sperrklinke 30 ist verriegelt, die Notlösebetätigung wurde durch die Rückstellfeder in Ausgangsstellung gebracht.
5. Wieder bereiter Federspeicher (Fig. 3):
   Das Belüften des Druckvolumens 18 führt zur Wiederherstellung des Bereitschaftszustandes des Federspeichers 2. Der Riegel 30 hält die Sperrklinke solange im gelösten Zustand, bis die Federspeicherfedern 14, 16 ihre Vorspan nung wieder besitzen und der Federspeicherkolben 6 seine rechte Endlage einnimmt. Nach dem Einrasten der Sperrklinke 30 ist der Kraftschluß zwischen dem Federspeicherkolben 6 und der Kolbenstange 24 wieder hergestellt.

Um das Einrasten des Riegels in die Sperrklinke bei einer Betätigung der Notlöseeinrichtung sicherzustellen, ist im Kraftfluß zwischen der Notlösebetätigung und dem Mitnehmer 40 die Druckfeder 46 vorgesehen, deren Vorspannung die Schwenkbewegung der Klinke 30 von der Entriegelung des Zahnrades 38 bis zur Verriegelung durch den Riegel 48 sicherstellt.

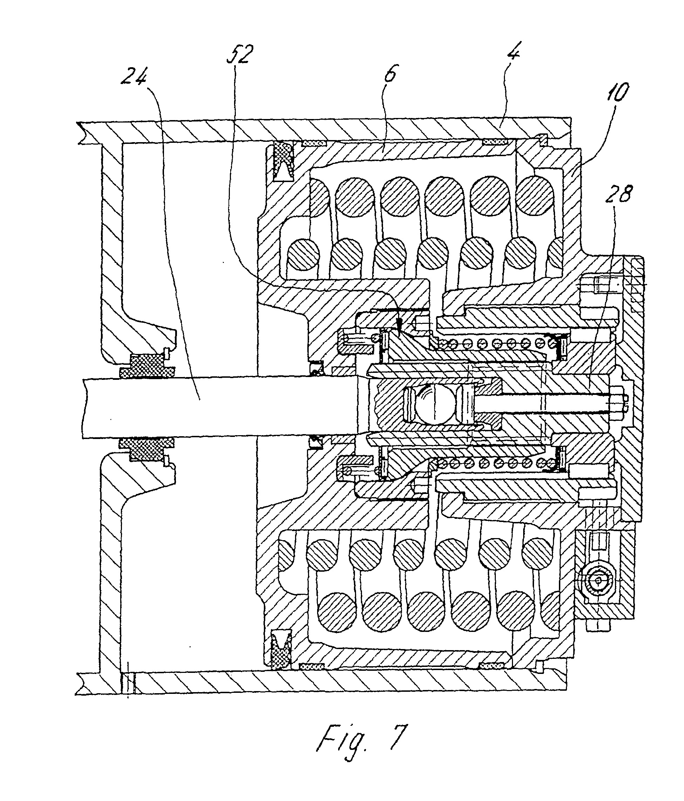

In Fig. 7 ist eine Abwandlung der Ausführungsform aus Fig. 1 bis 6 abgebildet. Bei dieser Ausführungsform ist ein Freilauf des Zahnrades, hier eine Konuskupplung 52, im Kraftfluß zwischen dem Federspeicherkolben 6 und der Kolbenstange 24 ausgebildet. Die Konuskupplung 52 ermöglicht eine Verminderung des beim Notlösevorgang auftretenden Stoßes, da sie ein ungehindertes Weiterlaufen des Zahnrades 38 und der Gewindespindel 32 nach dem Notlösevorgang sicherstellt.

Bei der ersten Grundvariante der Fig. 1 bis 6 und der Abwandlung dieser Variante nach Fig. 7 befinden sich die Sperrklinke und deren Verriegelung im Federspeicher- bzw. Gehäusedeckel 10, der fest mit dem Federspeichergehäuse 4 verbunden ist. Der Riegel 48 wird durch den Federspeicherkolben betätigt. Die Klinke 30 selbst ist zwischen zwei zusammensetzbaren Abschnitten 10a und 10b des Gehäusedeckels 10 angeordnet.

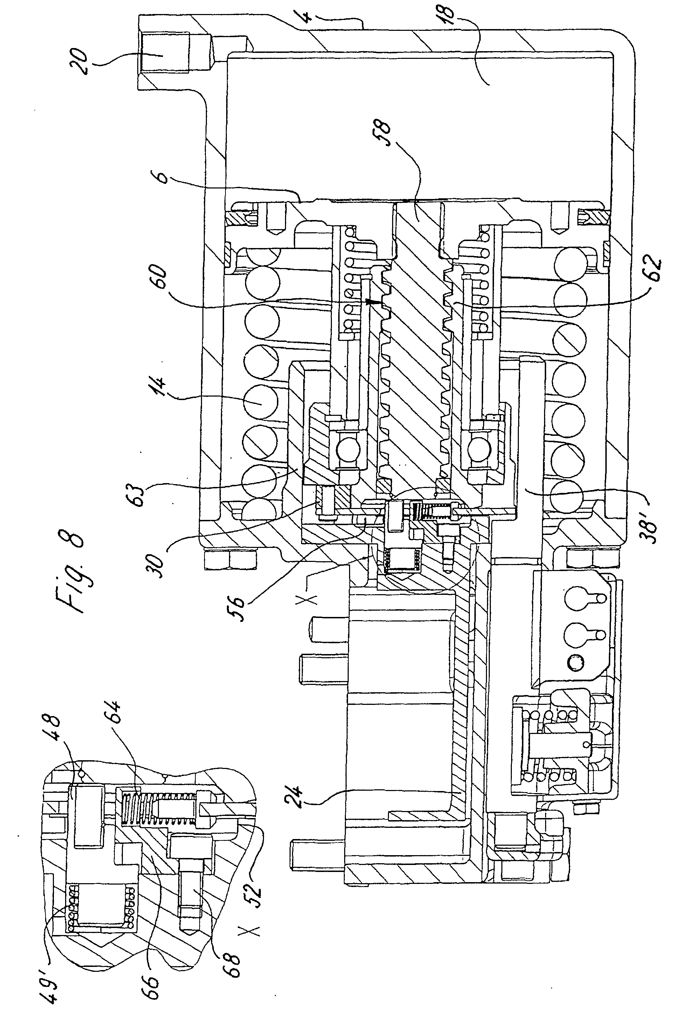

Die Variante der Fig. 8,9 und 10 unterscheidet sich grundsätzlich von der Variante der Fig. 1 durch die Anordnung der Sperrklinke 30 und des Riegels 48. Die Sperrklinke 30 und der zugehörige Riegel 48 sind auf der Kolbenstange 24 angeordnet. Der Riegel 48 wird durch die relativ zum Federspeicherkolben 24 drehbare Gewindespindel 58 bewegt.

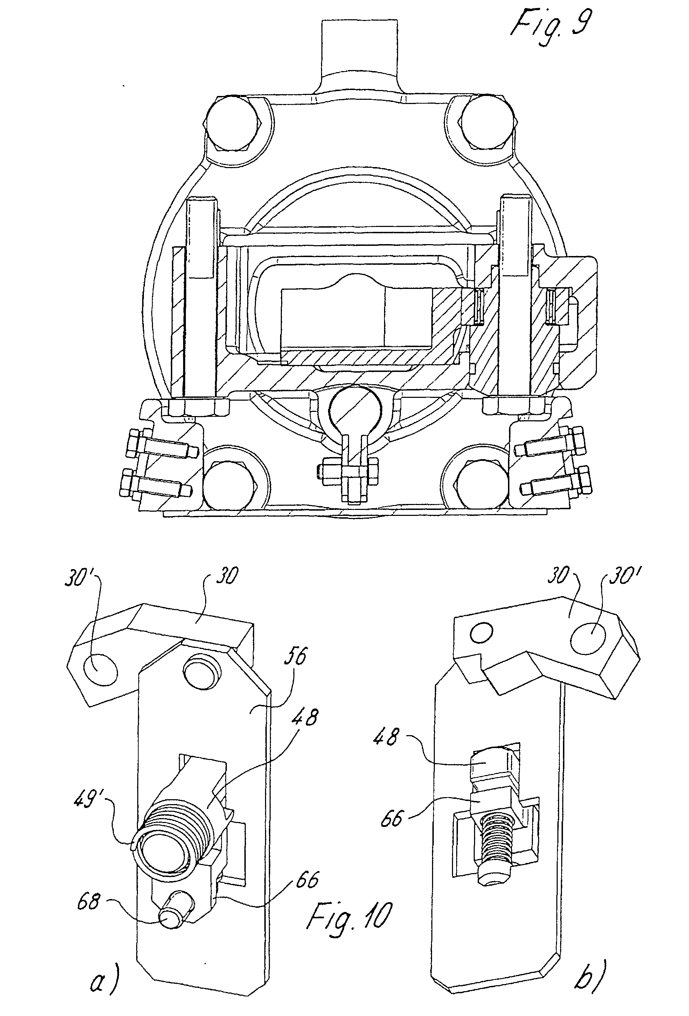

Eine weitere Möglichkeit der Riegelanordnung zeigt also die zweite Grundvariante der Fig. 8, 9 und 10. Bei dieser Ausführung ist die Sperrklinke 30 an der Kolbenstange 24 über einen Bolzen drehbar angeordnet (siehe hierzu die Bohrung 30' in der Klinke 30, siehe Figur 10a, 10b) und wird durch den Federspeicherkolben 6 betätigt. Der Federspeicherkolben 6 und die Federspeicherfeder 14 sind bei diesem Ausführungsbeispiel derart angeordnet, daß der Druckraum 18 in der Zeichnung rechts vom Federspeicherkolben 6 liegt. Der Federspeicherkolben 6 sitzt auf der Gewindespindel 58, welche an einem ihrer Enden fest mit dem Federspeicherkolben 6 verschraubt ist und in ihrem vom Kolben 6 angewandten Bereich mit einer Art Trapezgewinde versehen ist. Im Bereich des Trapezgewindes ist die Gewindespindel 58 in eine mit entsprechendem Innengewinde versehene Hülse 62 eingeschraubt, welche an ihrem vom Federspeicherkolben 6 abgewandten Ende mit einer Außenverzahnung versehen ist, so daß in diesem Bereich der Hülse 62 das Zahnrad 38' ausgebildet wird. Die Sperrklinke 30, welche an einem Endbereich der axial und radial verschieblichen Halteplatte 56 angeordnet ist, greift in einer ihrer Betriebsstellungen in das Zahnrad 38' ein und blockiert dieses. Ein Betätigen der Notlösevorrichtung verschiebt die Platte 56 radial und löst die Klinke 30 und unterbricht derart den Kraftfluß zwischen dem Federspeicherkolben 6 und der Kolbenstange 24. Dabei greift der Riegel 48 - vorgeschoben von der Riegelfeder 49' - in eine Öffnung der Halteplatte 56 und verriegelt diese radial. Der Riegel 48 wird durch die mit dem Federspeicherkolben 6 fest verbundene Spindel 58 gelöst.

Der Riegel 48 ist bei dieser Variante der Erfindung somit zwischen der Kolbenstange 24 und dem Federspeicherkolben 6 angeordnet. Die Riegelfeder 49' sitzt zwischen der Kolbenstange 24 und dem Federspeicherkolben 6. Die Halteplatte 56 ist in einem inneren zylindrischen Ansatz 63 des Bremszylindergehäuses radial verschieblich und bewegt sich axial mit der Kolbenstange 24 und dem Federspeicherkolben 6. Das radiale Verschieben der Platte 56 erfolgt über eine Schraubenfeder 64, die an einem Bolzen 65 in der Halteplatte 56 und an einem Halteteil 66 abgestützt ist, welches unbeweglich an der Kolbenstange 24 und einem Bolzen 68 verschraubt ist.

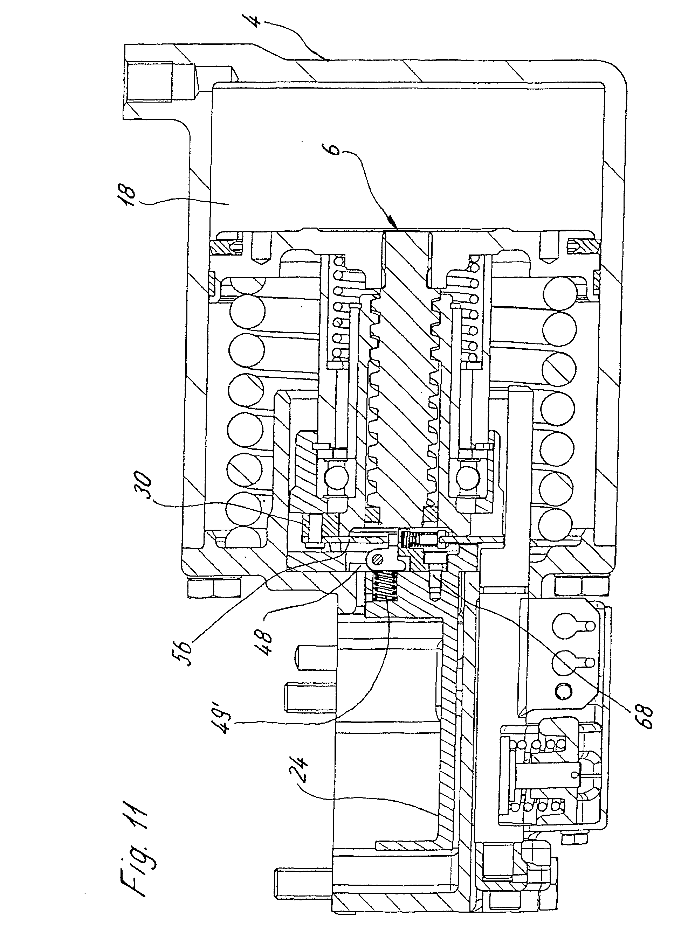

Denkbar ist alternativ auch eine Riegelbetätigung zwischen der Kolbenstange 24 und dem Federspeichergehäuse 4. Eine derartige Ausführungsform zeigt Fig. 11. Der prinzipielle Aufbau dieser Ausführungsform ähnelt dem Ausführungsbeispiel der Fig. 8 bis 10 hinsichtlich der Kopplung des Federspeicherkolbens 6. Allerdings ist der Riegel 48 derart ausgebildet, daß er beim Bewegen der Kolbenstange vom Federspeichergehäuse 4 anschlägt und bei fortgesetzter Bewegung um eine Achse 66 verdreht wird. Diese Drehbewegung und eine umgekehrte Drehbewegung durch die Feder 49 zwischen Kolbenstange 6 und Riegel 48 bewegen den Riegel 48 in seine beiden Betriebsstellungen und bewegen ihn derart in und aus der Ausnehmung 64 der Halteplatte 56.

### Bezugszeichenliste

- Federspeicherzylinder: 2
- Gehäuse: 4
- Federspeicherkolben: 6
- Dichtungen/Gleitbänder: 8a-8c
- Gehäusedeckel: 10
- Sprengring: 12
- Federspeicherfeder: 14, 16
- Druckraum: 18
- Luftanschluß: 20
- Kolbenstange: 24
- Notlöseeinrichtung: 26
- Spindelanordnung: 28
- Sperrklinke: 30
- Klinkenfeder: 33
- Achse: 31
- Gewindespindel: 32
- Führung: 34
- Ausnehmung: 35
- Paßfeder: 36
- Zahnrad: 38
- Mitnehmer: 40
- Bowdenzug: 42
- Rückstellfeder: 44
- Druckfeder: 46
- Riegel: 48
- Riegelfeder: 49
- Rückdruckfeder: 50
- Riegelkopf: 51
- Konuskupplung: 52
- Anzeigevorrichtung: 54
- Platte: 56
- Gewindespindel: 58
- Gewinde: 60
- Hülse: 62
- Ansatz: 63
- Feder: 64
- Bolzen: 65
- Halteteil: 66
- Bolzen: 68

## Patentansprüche

1. Pneumatisch, hydraulisch oder elektromechanisch betätigter Federspeicherbremszylinder mit einer Notlösevorrichtung, der folgendes aufweist:
a) ein Gehäuse (4), in dem ein Federspeicherkolben (6) mit einer Kolbenstange (24) axial verschiebbar ist,
b) wenigstens eine Federspeicherfeder (14, 16), und
c) bei einer Auslegung mittels pneumatischer oder hydraulischer Betätigung einen Druckanschluß (20) zum Beaufschlagen des Federspeicherkolbens mit einem Druckfluid;
d) wobei die Notlösevorrichtung eine Betätigungseinrichtung und einen Notlösemechanismus zum Unterbrechen des Kraftflußes zwischen Federspeicherkolben (6) und Kolbenstange (24) mit einer Haltevorrichtung (30) zum Halten der Notlösevorrichtung umfaßt, die zum Halten der Notlösevorrichtung in verschieden Haltepositionen ausgelegt ist,
e) eine Sperreinrichtung (48) zum Verhindern des Haltens der Haltevorrichtung (30) des Notlösemechanismus bei nur teilweise gelöstem Federspeicherkolben (6),
**dadurch gekennzeichnet, daß**
f) die Sperreinrichtung einen Riegel (48) aufweist, der die Haltevorrichtung (48) in ihrer gelösten Stellung verriegelt, bis der Federspeicherkolben (6) vollständig gelöst ist.

2. Federspeicherbremszylinder nach Anspruch 1, **dadurch gekennzeichnet, daß** die Haltevorrichtung (30) eine auf ein Zahnrad (48) wirkende Sperrklinke (30) aufweist.

3. Federspeicherbremszylinder nach einem der vorstehenden Ansprüche, **dadurch gekennzeichnet, daß** die Haltevorrichtung (30) drehend und/oder linear und/oder rastend und/oder klemmend ausgelegt ist und mehrere Haltepositionen zuläßt.

4. Federspeicherbremszylinder nach einem der vorstehenden Ansprüche, **gekennzeichnet durch** wenigstens eine Feder (44, 46) im Kraftfluß der Notlösevorrichtung zur Vermeidung von Zwischenzuständen der Sperrklinke (30).

5. Federspeicherbremszylinder nach einem der vorstehenden Ansprüche, **dadurch gekennzeichnet, daß** der Riegel (48) wie folgt angeordnet ist:
- zwischen dem Federspeichergehäuse (4) und dem Federspeicherkolben (6); oder
- zwischen der Kolbenstange (24) und dem Federspeicherkolben (6); oder
- zwischen der Kolbenstange (24) und dem Federspeichergehäuse (4).

6. Federspeicherbremszylinder nach einem der vorstehenden Ansprüche, **dadurch gekennzeichnet, daß** die Kraft der Federspeicherfeder (14, 16) über den Federspeicherkolben (6) entweder auf dem Druckraum (18) oder über eine Kolbenstange (24) am Federspeicherkolben 6 abgestützt ist.

7. Federspeicherbremszylinder nach einem der vorstehenden Ansprüche, **dadurch gekennzeichnet, daß** im Kraftfluß zwischen dem Federspeicherkolben (6) und der Kolbenstange (24) als Element des Notlösemechanismus eine Gewindespindel (32) angeordnet ist.

8. Federspeicherbremszylinder nach einem der vorstehenden Ansprüche, **dadurch gekennzeichnet, daß** das Drehmoment der Gewindespindel (32) über eine verschiebbare Führung (34) mit Paßfeder (36) auf das Zahnrad (38) übertragen wird, das von der Sperrklinke (30) verriegelbar ist.

9. Federspeicherbremszylinder nach einem der vorstehenden Ansprüche, **dadurch gekennzeichnet, daß** die Notlösebetätigungseinheit folgendes aufweist: einen Mitnehmer (40) zum Mitnehmen der Sperrklinke (10), einen Bowdenzug (42) und zumindest eine Rückstellfeder (44) und eine Druckfeder (46) am Bowdenzug (42).

10. Federspeicherbremszylinder nach einem der vorstehenden Ansprüche, **dadurch gekennzeichnet, daß** der Riegel (48) im wesentlichen eine bolzenartige Form aufweist und an seinem dem Gehäusedeckelabschnitt (10b) zugewandten Ende mit einem Riegelkopf (51) versehen ist, welcher dazu ausgelegt ist, in eine Ausnehmung (35) der Sperrklinke (39) einzugreifen.

11. Federspeicherbremszylinder nach einem der vorstehenden Ansprüche, **dadurch gekennzeichnet, daß** zwischen dem Gehäusedeckel (10a, 10b) und dem Riegel (48) eine Riegelfeder (49) angeordnet ist, welche den Riegel (48) in Richtung der Sperrklinke (30) drückt.

12. Federspeicherbremszylinder nach einem der vorstehenden Ansprüche, **dadurch gekennzeichnet, daß** der Riegel (48) vom Federspeicherkolben 6 aus seiner Raststellung in der Sperrklinke (30) verschiebbar ist.

13. Federspeicherbremszylinder nach einem der vorstehenden Ansprüche, **dadurch gekennzeichnet, daß** im Kraftfluß zwischen dem Federspeicherkolben (6) und der Kolbenstange (24) ein Freilauf (52) für das Zahnrad (38) vorgesehen ist.

14. Federspeicherbremszylinder nach einem der vorstehenden Ansprüche, **dadurch gekennzeichnet, daß** der Freilauf als Konuskupplung (52) ausgebildet ist.

15. Federspeicherbremszylinder nach einem der vorstehenden Ansprüche, **dadurch gekennzeichnet, daß** die Sperrklinke (30) und der Riegel (48) auf der Kolbenstange (24) angeordnet sind.

16. Federspeicherbremszylinder nach einem der vorstehenden Ansprüche, **dadurch gekennzeichnet, daß** der Riegel (48) durch die mit dem Federspeicherkolben (24) verbundene Gewindespindel (32) betätigbar ist.

17. Federspeicherbremszylinder nach einem der vorstehenden Ansprüche, **gekennzeichnet durch** eine Anzeigevorrichtung (54) zur Anzeige des Betriebszustandes der Notlösevorrichtung.

18. Federspeicherbremszylinder nach einem der vorhergehenden Ansprüche, **dadurch gekennzeichnet, daß** die Sperrklinke (32) an einer Halteplatte (56) angeordnet ist, welche radial in einem zylindrischen Ansatz (63) des Zylindergehäuses (4) verschiebbar ist, derart, daß durch radiales Verschieben der Halteplatte (56) und der Sperrklinke (30) das Zahnrad (30') freigibt oder blockiert.

19. Federspeicherbremszylinder nach einem der vorhergehenden Ansprüche, **dadurch gekennzeichnet, daß** der Riegel (48) an der Kolbenstange (24) angeordnet ist und dazu ausgelegt ist, in einer Betriebsstellung in eine Ausnehmung der Halteplatte (56) einzugreifen und diese radial zu verriegeln.

20. Federspeicherbremszylinder nach einem der vorhergehenden Ansprüche, **dadurch gekennzeichnet, daß** der Riegel (48) an der Kolbenstange (24) derart verschwenkbar gelagert ist, daß er bei axialen Bewegungen der Kolbenstange vom Zylindergehäuse (4) in und aus einer Ausnehmung der Halteplatte (56) verschwenkbar ist.

## Claims

1. Spring brake actuator for pneumatic, hydraulic or electromechanical operation, which includes an emergency release device, comprising:
(a) a housing (4) in whose interior a spring-loading piston (6) with a piston rod (24) is disposed for axial displacement,
(b) at least one spring-loading spring (14, 16), and
(c) in a configuration for pneumatic or hydraulic operation one pressure port (20) for acting upon said spring-loading piston with a pressurised fluid;
(d) wherein said emergency release device comprises an actuating means and an emergency release mechanism for interrupting the flow of power between said spring-loading piston (6) and said piston rod (24) with a holding means (30) for holding said emergency brake device, which is configured for holding said emergency brake device in different holding positions,
(e) a locking means (48) for preventing said holding means (30) of said emergency release mechanism from holding when said spring-loading piston (6) is released only partly,
**characterised in that**
(f) said locking means comprises a latch (48) that locks said holding means (48) in its released position until said spring-loading piston (6) is completely released.

2. Spring brake actuator according to Claim 1, **characterised in that** said holding means (30) comprises a locking pawl (30) acting upon a gearwheel (48).

3. Spring brake actuator according to any of the preceding Claims, **characterised in that** said holding means (30) is configured for rotation and/or a linear motion and/or for locking and/or for clamping and allows for several holding positions.

4. Spring brake actuator according to any of the preceding Claims, **characterised by** at least one spring (44, 46) in the flow of power of said emergency release device for avoiding intermediate conditions of said locking pawl (30).

5. Spring brake actuator according to any of the preceding Claims, **characterised in that** said latch (48) is arranged as follows:
- between said spring-loading housing (4) and said spring-loading piston (6), or
- between said piston rod (24) and said spring-loading piston (6), or
- between said piston rod (24) and said spring-loading housing (4).

6. Spring brake actuator according to any of the preceding Claims, **characterised in that** said the force of said spring-loading spring (14, 16) is supported either via said spring-loading piston (6) on the pressure space (18) or via a piston rod (24) on said spring-loading piston (6).

7. Spring brake actuator according to any of the preceding Claims, **characterised in that** a threaded spindle (32) is arranged as an element of said emergency release mechanism in the flow of power between said spring-loading piston (6) and said piston rod (24).

8. Spring brake actuator according to any of the preceding Claims, **characterised in that** the torque of said threaded spindle (32) is transmitted via a displaceable guide (34) with a parallel key (36) onto said gearwheel (38) that is adapted for being locked by said locking pawl (30).

9. Spring brake actuator according to any of the preceding Claims, **characterised in that** said emergency release unit comprises: a driving element (40) for driving said locking pawl (10), a Bowden control cable (42) and at least one restoring spring (44) and a compression spring (46) on said Bowden control cable (42).

10. Spring brake actuator according to any of the preceding Claims, **characterised in that** said latch (48) has a substantially bolt-shaped form and is provided with a latch head (51) on its end facing a section (10b) of the housing cover, which latch head is configured for engagement in a recess (35) of said latching pawl (39).

11. Spring brake actuator according to any of the preceding Claims, **characterised in that** a latch spring (49) is disposed between said housing cover (10a, 10b) and said latch (48), which urges said latch (48) in a direction towards said locking pawl (30).

12. Spring brake actuator according to any of the preceding Claims, **characterised in that** said latch (48) is adapted for displacement by said spring-loading piston (6) out of its locking position into said locking pawl (30).

13. Spring brake actuator according to any of the preceding Claims, **characterised in that** an overrunning clutch means (52) for said gearwheel (38) is provided in the flow of power between said spring-loading piston (6) and said piston rod (24).

14. Spring brake actuator according to any of the preceding Claims, **characterised in that** said overrunning clutch means is configured as cone-type clutch (52).

15. Spring brake actuator according to any of the preceding Claims, **characterised in that** said locking pawl (30) and said latch (48) are arranged on said piston rod (24).

16. Spring brake actuator according to any of the preceding Claims, **characterised in that** said latch (48) is adapted for being operated by said threaded spindle (32) connected to said spring-loading piston (24).

17. Spring brake actuator according to any of the preceding Claims, **characterised by** a display means (54) for displaying the operating condition of said emergency release device.

18. Spring brake actuator according to any of the preceding Claims, **characterised in that** said locking pawl (32) is disposed on a holding plate (56) that is adapted for radial displacement in a cylindrical nose (63) on said cylinder housing (4) in such a way that said gearwheel (30') is released or locked by the radial displacement of said holding plate (56) and said locking pawl (30).

19. Spring brake actuator according to any of the preceding Claims, **characterised in that** said latch (48) is disposed on said piston rod (24) and is configured for engagement in a recess of said holding plate (56) and for locking the latter in a radial direction in one operating position.

20. Spring brake actuator according to any of the preceding Claims, **characterised in that** said latch (48) is supported on said piston rod (24) for pivoting in such a way that it can be pivoted by said cylinder housing (4) into and out of a recess in said holding plate (56) when said piston rod performs axial movements.

## Revendications

1. Cylindre de frein à accumulateur pour l'actionnement de manière pneumatique, hydraulique ou électromécanique, qui contient un dispositif de desserrage d'urgence, comprenant :
(a) un carter (4), à l'intérieur duquel un piston d'accumulation (6) à une tige de piston (24) est disposé pour déplacement axial,
(b) au moins un ressort accumulateur (14, 16), et
(c) au cas d'une configuration pour l'actionnement pneumatique ou hydraulique, un raccord de tubulure de pression pneumatique ou hydraulique (20) pour l'opération sur ledit piston d'accumulation moyennant un fluide sous pression ;
(d) dans lequel ledit dispositif de desserrage d'urgence comprend un moyen de commande et un mécanisme de desserrage d'urgence afin d'interrompre le flux de puissance entre ledit piston d'accumulation (6) et ladite tige de piston (24) moyennant un moyen de retenue (30) afin de retenir ledit dispositif de desserrage d'urgence, qui est configuré de manière à retenir ledit dispositif de desserrage d'urgence en positions de retenue différentes,
(e) un dispositif de blocage (48) à empêcher la retenue moyennant ledit moyen de retenue (30) dudit mécanisme de desserrage d'urgence quand ledit piston d'accumulation (6) n'est desserré qu'en partie,
**caractérisé en ce que**
(f) ledit dispositif de blocage comprend un verrou (48) qui verrouille ledit moyen de retenue (48) en sa position desserrée jusqu'à ce que ledit piston d'accumulation (6) soit desserré complètement.

2. Cylindre de frein à accumulateur selon la revendication 1, **caractérisé en ce que** ledit moyen de retenue (30) comprend un cliquet d'arrêt (30), qui agit sur une roue d'engrenage (48).

3. Cylindre de frein à accumulateur selon une quelconque des revendications précédentes, **caractérisé en ce que** ledit moyen de retenue (30) est configuré pour un mouvement rotatif et/ou linéaire et/ou pour l'arrêt et/ou pour un serrage, en permettant plusieurs positions de retenue.

4. Cylindre de frein à accumulateur selon une quelconque des revendications précédentes, **caractérisé par** au moins un ressort (44, 46) dans le flux de puissance dudit dispositif de desserrage d'urgence afin d'éviter des états intermédiaires dudit cliquet d'arrêt (30).

5. Cylindre de frein à accumulateur selon une quelconque des revendications précédentes, **caractérisé en ce que** ledit verrou (48) est disposé comme suit :
- entre ledit carter d'accumulation (4) et ledit piston d'accumulation (6),
- entre ladite tige de piston (24) et ledit piston d'accumulation (6), ou
- entre ladite tige de piston (24) et ledit carter d'accumulation (4).

6. Cylindre de frein à accumulateur selon une quelconque des revendications précédentes, **caractérisé en ce que** la puissance dudit ressort accumulateur (14, 16) s'appuie soit via ledit piston d'accumulation (6) sur la chambre de pression (18), soit via une tige de piston (24) sur ledit piston d'accumulation (6).

7. Cylindre de frein à accumulateur selon une quelconque des revendications précédentes, **caractérisé en ce qu'**une broche filetée (32) est disposée en tant qu'un élément dudit mécanisme de desserrage d'urgence dans le flux de puissance entre ledit piston d'accumulation (6) et ladite tige de piston (24).

8. Cylindre de frein à accumulateur selon une quelconque des revendications précédentes, **caractérisé en ce que** le couple de rotation de ladite broche filetée (32) est transmis via un guide déplaçable (34) à une languette d'ajustage (36) à ladite roue d'engrenage (38), qui est apte à être bloquée par ledit cliquet d'arrêt (30).

9. Cylindre de frein à accumulateur selon une quelconque des revendications précédentes, **caractérisé en ce que** ladite unité de desserrage d'urgence comprend : un entraîneur (40) à entraîner ledit cliquet d'arrêt (10), un câble de commande Bowden (42) et au moins un ressort de rappel (44) et un ressort de pression (46) sur ledit câble de commande Bowden (42).

10. Cylindre de frein à accumulateur selon une quelconque des revendications précédentes, **caractérisé en ce que** ledit verrou (48) a une configuration essentiellement sous forme de boulon, en étant muni d'une tête de verrou (51) sur son extrémité en face d'un segment (10b) du couvercle du carter, ladite tête de verrou étant configurée pour la prise dans un évidement (35) dudit cliquet d'arrêt (39).

11. Cylindre de frein à accumulateur selon une quelconque des revendications précédentes, **caractérisé en ce qu'**un ressort de verrou (49) est disposé entre ledit couvercle de carter (10a, 10b) et ledit verrou (48), qui presse ledit verrou (48) en un sens vers ledit cliquet d'arrêt (30).

12. Cylindre de frein à accumulateur selon une quelconque des revendications précédentes, **caractérisé en ce que** ledit verrou (48) est apte à être déplacé par ledit piston d'accumulation (6) en dehors sa position de blocage dans ledit cliquet d'arrêt (30).

13. Cylindre de frein à accumulateur selon une quelconque des revendications précédentes, **caractérisé en ce qu'**un moyen à roue libre (52) pour ladite roue d'engrenage (38) est disposé dans le flux de puissance entre ledit piston d'accumulation (6) et ladite tige de piston (24).

14. Cylindre de frein à accumulateur selon une quelconque des revendications précédentes, **caractérisé en ce que** ledit moyen à roue libre est configuré sous forme d'un coupleur à cône (52).

15. Cylindre de frein à accumulateur selon une quelconque des revendications précédentes, **caractérisé en ce que** ledit cliquet d'arrêt (30) et ledit verrou (48) sont disposés sur ladite tige de piston (24).

16. Cylindre de frein à accumulateur selon une quelconque des revendications précédentes, **caractérisé en ce que** ledit verrou (48) est apte à être commandé par ladite broche filetée (32) reliée audit piston d'accumulation (24).

17. Cylindre de frein à accumulateur selon une quelconque des revendications précédentes, **caractérisé par** un moyen d'affichage (54) à visualiser l'état de fonctionnement dudit dispositif de desserrage d'urgence.

18. Cylindre de frein à accumulateur selon une quelconque des revendications précédentes, **caractérisé en ce que** ledit cliquet d'arrêt (32) est disposé sur une plaque de retenue (56) apte à subir un déplacement radial dans un épaulement cylindrique (63) sur ledit carter du cylindre (4) d'une telle façon, que ladite roue d'engrenage (30') soit desserrée ou bloqué par le déplacement radial de ladite plaque de retenue (56) et ledit cliquet d'arrêt (30).

19. Cylindre de frein à accumulateur selon une quelconque des revendications précédentes, **caractérisé en ce que** ledit verrou (48) est disposé sur ladite tige de piston (24), en étant configuré pour la prise dans un évidement de ladite plaque de retenue (56) et pour le blocage de la dernière en un sens radial en une position de fonctionnement.

20. Cylindre de frein à accumulateur selon une quelconque des revendications précédentes, **caractérisé en ce que** ledit verrou (48) appuie sur ladite tige de piston (24) pour un pivotement d'une telle manière, qu'il soit pivotable par ledit carter de cylindre (4) dans et en en dehors d'un évidement dans ladite plaque de retenue (56), quand ladite tige de piston est entraîné en un mouvement axial.
